# EUROPÄISCHE PATENTSCHRIFT

(11) **EP 3 313 720 B1**
(45) Veröffentlichungstag und Bekanntmachung des Hinweises auf die Patenterteilung: **30.04.2025**
(21) Anmeldenummer: 16713736.3
(22) Anmeldetag: 31.03.2016
(51) Int. Cl.: B62M 6/40, B62K 19/16, B62K 19/30, B29C 45/17, B29C 45/14

(54) **VERFAHREN ZUR HERSTELLUNG EINES KUNSTSTOFFRAHMENS FÜR EIN ZWEIRAD**
METHOD OF MANUFACTURING A PLASTIC BICYCLE FRAME
ROCÉDÉ DE FABRICATION D'UN CADRE DE VÉLO EN MATIÈRE PLASTIQUE

(30) Priorität: 02.07.2015 DE 102015008561
(43) Veröffentlichungstag der Anmeldung: 02.05.2018
(73) Patentinhaber: Plastic Innovation GmbH, 4100 Ottensheim (AT)
(72) Erfinder: WOLFSBERGER, Christian, 4100 Ottensheim (AT)
(74) Vertreter: Laufhütte, Dieter
(86) Internationale Anmeldenummer: PCT/EP2016/000536
(87) Internationale Veröffentlichungsnummer: WO 2017/001031

(56) Entgegenhaltungen:
- WO-A1-2014/193245
- WO-A1-95/24332
- CN-A- 103 552 220
- CN-U- 203 581 271
- JP-A- H04 208 425
- US-A- 5 533 742
- US-A1- 2012 098 232
- MICHAELI W ET AL: "DIE WIT AUF DEM WEG ZUR SERIE WASSERINJEKTIONSTECHNIK JETZT INDUSTRIELL ANGEWENDET", KUNSTSTOFFE, CARL HANSER VERLAG, MUNCHEN, DE, vol. 91, no. 3, 1 March 2001 (2001-03-01), pages 104 - 106, XP001039128, ISSN: 0023-5563
- MIKELL KNIGHTS: "Water Injection Molding Makes Hollow Parts Faster, Lighter", INTERNET CITATION, April 2002 (2002-04-01), pages 1 - 6, XP002741158, Retrieved from the Internet <URL:http://www.ptonline.com/articles/water-injection-molding-makes-hollow-parts-faster-lighter> [retrieved on 20150701]
- DIETMAR DUMMER ET AL: "FIT-Hybrid - Hohlkörperverbundstrukturen im Minutentakt", KUNSTSTOFFE, 1 March 2011 (2011-03-01), pages 110 - 114, XP055277783, Retrieved from the Internet <URL:www.kunststoffe.de/kunststoffe-zeitschrift/archiv/artikel/fit-hybrid-hohlkoerperverbundstrukturen-im-minutentakt-536822.html> [retrieved on 20160607]
- ANONYMOUS: "BASF und SGL entwickeln reaktive Polyamid-Carbonfaser-Composite", PLASTVERARBEITER, 11 October 2012 (2012-10-11), XP055278475, Retrieved from the Internet <URL:http://www.plastverarbeiter.de/14452/basf-und-sgl-entwickeln-reaktive-polyamid-carbonfaser-composite/> [retrieved on 20160607]
- ANNONYMOUS: "Carbonfahrräder leicht gemacht", K-ZEITUNG - KUNSTSTOFF UND KAUTSCHUK, 10 August 2012 (2012-08-10), pages 17 - 17, XP055278484, Retrieved from the Internet <URL:http://www.k-zeitung.de/download/pdf/K-ZEITUNG/archiv/KUK_1215_ePaper.pdf> [retrieved on 20160607]

## Beschreibung

Die Erfindung betrifft ein Verfahren zur Herstellung eines im Inneren mindestens einen Hohlraum aufweisenden Kunststoffrahmens für ein Zweirad, wie beschrieben im Oberbegriff des Anspruchs 1.

Es ist bereits bekannt, Fahrradrahmen aus Kunststoff herzustellen. Hierzu wird üblicherweise ein Harzinjektionsverfahren, welches unter der Bezeichnung "Resin Transfer Moulding" (RTM) bekannt ist, eingesetzt. Bei diesem Verfahren werden Glas- und/oder Kohlefasergewebe in ein formgebendes Werkzeug eingelegt. Bei geschlossenem Werkzeug wird das Gewebe mit einem duroplastischen Matrixmaterial, wie einem Epoxyharz oder Polyurethan welches in das Werkzeug injiziert wird, getränkt. Die duroplastischen Matrixmaterialien bestehen meist aus zwei Grundsubstanzen, welche vor dem Einbringen in das Werkzeug gut miteinander vermischt werden müssen. Nach der Vermischung und der Injektion in das Werkzeug erfolgt eine chemische Reaktion. Nach entsprechender Umsetzung der Reaktanzen kann das Bauteil entformt werden.

Die Glas- oder Kohlefasergewebe werden üblicherweise in einem dreidimensional verwebten Zustand in das Werkzeug eingelegt. Im Inneren des Gewebes wird meist ein aufblasbarer Schlauch eingelegt, sodass nach der Harzinjektion der Schlauch im Bauteilinneren mit einem Fluid aufgeblasen werden kann, sodass hierdurch der gewünschte Hohlraum entsteht. Nach Beendigung der Reaktion der Reaktanden wird das unter Druck eingebrachte Fluid abgelassen. Das ausgehärtete Bauteil kann dann entnommen werden.

Fahrradrahmen, die aus duroplastischen Matrixmaterial bestehen, haben den großen Nachteil, dass sie aufgrund des gewählten Materials nicht sinnvoll recycelt werden können. Abgesehen von einer thermischen Verwertung durch Verbrennen, gibt es keine vernünftige Wiederverwertung für die entsprechend hergestellten Bauteile.

Ein Fahrradrahmen weist eine komplexe Geometrie auf, die eine Herstellung im Rahmen eines Spritzgussverfahrens kompliziert machen. Insbesondere umfasst der Rahmen mehrere längere und innen hohle Rohre, die im Winkel zueinander angeordnet sind und unterschiedliche Querschnitte haben. Ferner sind diverse Anbauteile am Rahmen unterzubringen. Die Druckschrift CN 103 552 220 A offenbart die grundlegende Idee, die Hohlräume in den Rohren durch Verdrängung des noch flüssigen Kunststoffs im Kern der stangenartigen Kunststoffgebilde in der Kavität zu schaffen.

Aufgabe der vorliegenden Erfindung ist es, ein Verfahren zur Herstellung eines Kunststoffrahmens für ein Zweirad an die Hand zu geben, bei dem ein Kunststoff einsetzbar ist, der ein sinnvolles Recycling des Zweiradrahmens ermöglicht.

Erfindungsgemäß ist zur Lösung dieser Aufgabe ein Verfahren zur Herstellung eines im Inneren mindestens einen Hohlraum aufweisenden Kunststoffrahmens für ein Zweirad mittels Kunststoffspritzguss mit den Schritten entsprechend dem Anspruch 1 an die Hand gegeben.

Das erfindungsgemäße Verfahren umfasst zumindest folgende Schritte:
- Einspritzen einer thermoplastischen Kunststoffschmelze in ein geschlossenes Spritzgusswerkzeug;
- Injizieren eines Fluids zur Verdrängung der plastischen Seele aus der Bauteilkavität und
- zumindest kurzes Aufrechterhalten des Fluiddruckes im Bauteilinneren.

Bei dem erfindungsgemäßen Verfahren bildet die Kavität des geschlossenen Spitzgusswerkzeugs die Geometrie eines Zweiradrahmens, beispielsweise eines Fahrradrahmens, wobei das Werkzeug mit mindestens einem Injektor für die Einbringung eines Fluids ausgerüstet ist. Das Fluid ist in der Lage, die plastische Seele zu verdrängen und so einen rohrförmigen Querschnitt zu erzielen. Das Fluid wird volumenstrom- oder druck-/zeitgeregelt über ein voreingestelltes Profil injiziert. Durch den rohrförmigen Querschnitt kann die Abkühlphase der heißen Kunststoffschmelze aufgrund der vergleichsweise dünnen verbleibenden Restwandstärke erheblich verkürzt werden. Das bedeutet, dass nur eine vergleichsweise kurze Kühlzeit benötigt wird. Insgesamt ist mit einer sehr deutlichen Kühlzeitreduktion gegenüber einem Rahmen aus vollem Material zu rechnen. Aufgrund der schnelleren Kühlzeit kann die gesamte Zeit für die Herstellung eines Zweiradrahmens deutlich verkürzt werden. Somit lassen sich diese Bauteile noch kosteneffizienter fertigen. Darüber hinaus wird durch den bauteilinneren Hohlraum die Masse des gesamten Zweiradrahmens deutlich reduziert, was nicht nur einen Gewichtsvorteil sondern insbesondere einen ökonomischen Vorteil mit sich bringt. Bei einem geschlossenen rohrförmigen Querschnitt kann man auch von höherer Steifigkeit ausgehen. Wenn hier von einem rohrförmigen Querschnitt die Rede ist, kann dieser selbstverständlich kreisrund, oval, mehreckig und in jeder anderen beliebigen Form ausgebildet sein.

Vorteilhaft wird das Fluid nach zumindest kurzem Aufrechterhalten des Fluiddrucks ausgeblasen und/oder abgesaugt.

Demnach kann das Fluid die plastische Seele beispielsweise in eine in dem Spritzgusswerkzeug vorgesehene Nebenkavität drücken.

Gemäß einer alternativen Ausgestaltung der Erfindung kann das Fluid die plastische Seele über ein Masserückdrückverfahren durch den im Spritzgusswerkzeug befindlichen Heizkanal oder Teilheißkanal oder Kaltkanal der Kunststoffspritzgussmaschine in den Schneckenvorraum drücken.

Nach wieder einer vorteilhaften Ausgestaltung des erfindungsgemäßen Verfahrens kann das Spritzgusswerkzeug mit der vorteilhaft thermoplastischen Kunststoffschmelze nur teilgefüllt werden, wobei die plastische Seele dadurch verdrängt wird, dass sie vorzugsweise thermoplastische Kunststoffschmelze derart aufgeblasen wird, dass sie sich unter Bildung eines Hohlraums an die Wandung des Spritzgusswerkzeugs anlegt. Diese als Aufblasverfahren bekannte Verfahrensvariante ermöglicht einen sehr sparsamen Einsatz des für die Bildung des Rahmens zur Verfügung zu stellenden Kunststoffs.

Erfindungsgemäß ist vorgesehen, dass im Bereich wenigstens eines in den Kunststoffrahmen zu integrierenden Teils, wie beispielsweise eines Motors oder eines Ackumulators, ein entsprechend geformter Kern während des Spritzgussvorgangs eingesetzt wird, sodass dieser Bereich nach der Bauteilentformung hohl ist. In diese so gebildete Ausnehmung kann dann bei der Endmontage das jeweilige Bauteil, also beispielsweise der Motor oder der Akkumulator eingesetzt werden.

Gemäß einer weiteren Ausbildung der Erfindung kann vor dem Einspritzen der Kunststoffschmelze eine Design- und/oder Funktionsfolie und/oder ein Tape aus Kohle- oder Glasfasergewebe in das Werkzeug eingelegt und mit der Kunststoffschmelze hinterspritzt werden. Diese Folie kann selbstverständlich auch als Kombinationsfolie eingesetzt werden, die ein bestimmtes gewünschtes Design und auch eine bestimmte Funktionalität aufweist. Eine derartige Funktionalität könnte beispielsweise eine kapazitive Sensorik sein, über die das Zweiradlicht ein oder ausgeschaltet wird.

Wiederum eine andere vorteilhafte Ausgestaltung der Erfindung sieht vor, dass Teile des Zweiradrahmens, wie beispielsweise die Mittelstrebe als fertiges Teil aus Kunststoff, Aluminium oder einem anderen Material in das Spritzgusswerkzeug eingelegt und mit dem vorteilhaft thermoplastischen Kunststoff während des Spritzvorganges verbunden werden.

Obwohl das Fluid in erster Linie zur Bildung des Hohlraums im Kunststoffrahmen dient, kann es dadurch mit einem Zweitnutzen ausgestattet werden, dass es nach der Bildung des Hohlraums in einer Zirkulationsströmung geführt wird, sodass es nunmehr zur Kühlung des unmittelbar nach dem Spritzprozess noch sehr heiße Kunststoffmaterials dient.

Vorteilhaft kann in dem erfindungsgemäßen Verfahren ein Kunststoff eingesetzt werden, der aus der folgenden Gruppe ausgewählt ist:
Polyamid, vorzugsweise Polyamid 12, Polyamid 6 oder Polyamid 6.6, Polypropylen, Polyethylen, Polyethersulfon, Polyetherimid, Polyetherketon, Polyphenylensulfid, Polyvinylchlorid, Polyester, Acrylnitril-Butadien-Styrol (ABS), Polycarbonat/Acrylnitril-Butadien-Styrol (ABC/PC), Polycarbonat (PC) und besonders bevorzugt Polybutylenterephtalat oder Polyterephtalatethylen.

Auch diese Materialien können einzeln oder in Kombination ausgewählt und hier eingesetzt werden. Die ausgewählten Kunststoffe können darüber hinaus noch über Kurz- und/oder Langfasern aus Glas-, Carbon- und/oder Naturfasern verstärkt werden.

Alternativ kann der Kunststoff auch als Caprolactam mit einem zugehörigen Aktivator in dem Spritzgusswerkzeug eingespritzt werden und im beheizten Werkzeug polymerisiert werden.

Das injizierte Fluid kann vorteilhaft Wasser und/oder ein Gas sein. Dieses Fluid wird über mindestens einen im Werkzeug angeordneten Injektor eingebracht.

Weitere Merkmale, Einzelheiten und Vorteile werden anhand von in der Zeichnung dargestellten Ausführungsbeispielen, die Teilweise in den Figuren dargestellt sind, näher erläutert.

Es zeigen:
- Figuren 1 bis 5:: den Kunststoffrahmen eines Damenfahrrades nach einem ersten Ausführungsbeispiel der Erfindung in unterschiedlichen schematisch dargestellten Verfahrensstadien;
- Figuren 6 bis 10:: einen Kunststoffrahmen eines Herrenfahrrades gemäß einer zweiten Ausführungsform der Erfindung in unterschiedlichen schematisch dargestellten Verfahrensstadien und
- Figuren 11 bis 15:: den Kunststoffrahmen eines Scooters gemäß einem nicht von der Erfindung umfassten Verfahren in unterschiedlichen schematisch dargestellten Verfahrensstadien.

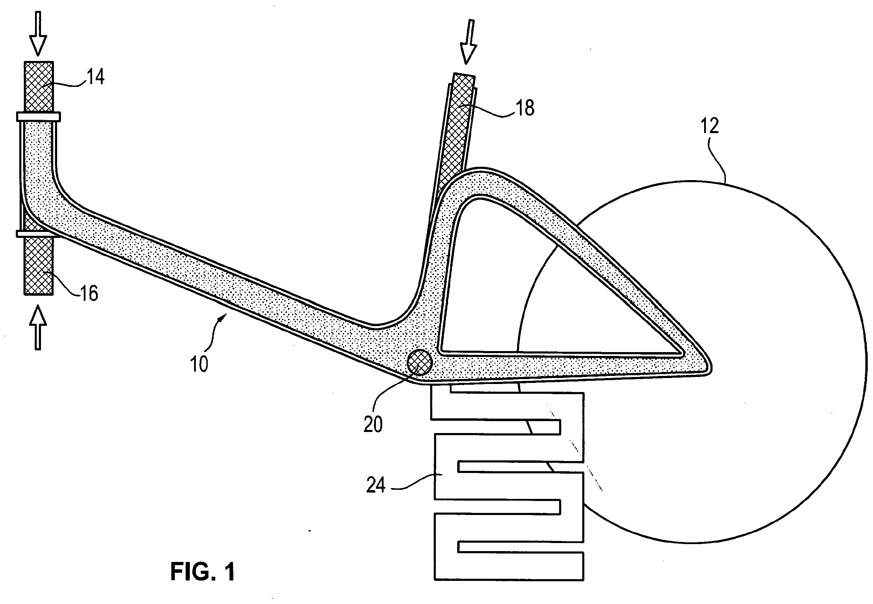

Anhand des ersten Ausführungsbeispiels der vorliegenden Erfindung gemäß den Figuren 1 bis 5 kann der grundsätzliche Verfahrensablauf des erfindungsgemäßen Verfahrens zur Herstellung eines Zweiradkunststoffrahmens erläutert werden.

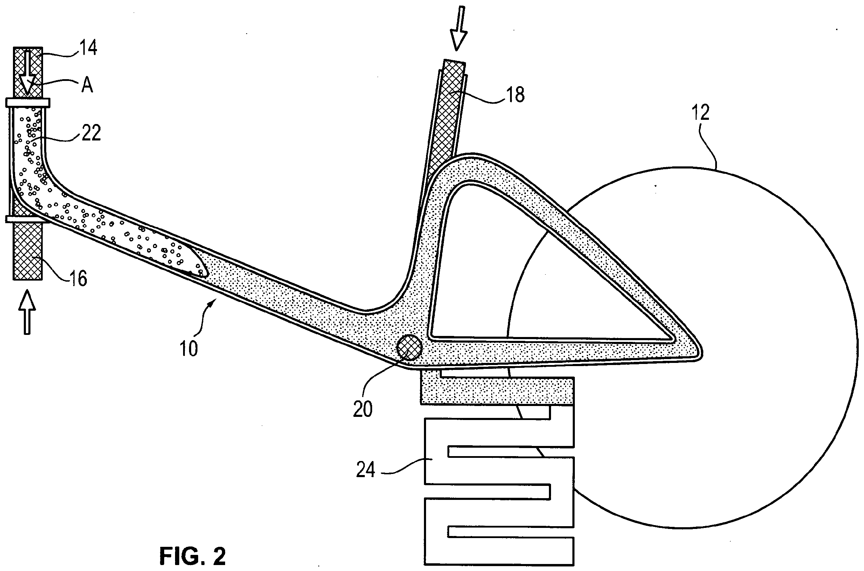

So ist in Figur 1 schematisch der Rahmen 10 eines Damenfahrrades gezeigt. Schematisch ist das im hinteren Teil des Rahmens später angeordnete Hinterrad 12 dargestellt. In der Figur 1 ist die thermoplastische Kunststoffschmelze gerade in das hier sonst nicht näher dargestellte geschlossene formgebende Werkzeug eingespritzt worden. Gleichzeitig sind in das Werkzeug Schieber bzw. Kerne 14, 16 und 18 in das formgebende Werkzeug in der jeweiligen Pfeilrichtung eingeschoben worden, sodass sie ein Eindringen der eingespritzten Kunststoffschmelze in diesen Bereich verhindern. Die Schieber 14 und 16 bilden hier Kavitäten für das Lenkkopflager, der Schieber 18 eine Kavität zur Aufnahme des später anzubringenden Sattelrohrs und ein senkrecht zur Zeichenebene stehender eingeschobener Schieber 20 bildet den Hohlraum, in dem später das Tretlager angeordnet wird. Entsprechend Figur 2 wird nun in Pfeilrichtung des Pfeils A ein Fluid 22 durch einen hier nicht näher dargestellten Injektor eingepresst, der die sogenannte plastische Seele aus dem Bauteilinneren verdrängt. In der Figur 2 ist hier ein Teil der Seele bereits verdrängt worden. Das überschüssige Kunststoffmaterial wird bei dieser Ausführungsform in eine Nebenkavität 24 gedrückt. Die Neben- oder Überlaufkavität 24 kann dabei über einen Schieber Hydraulisch, pneumatisch und/oder elektrisch geöffnet und geschlossen werden.

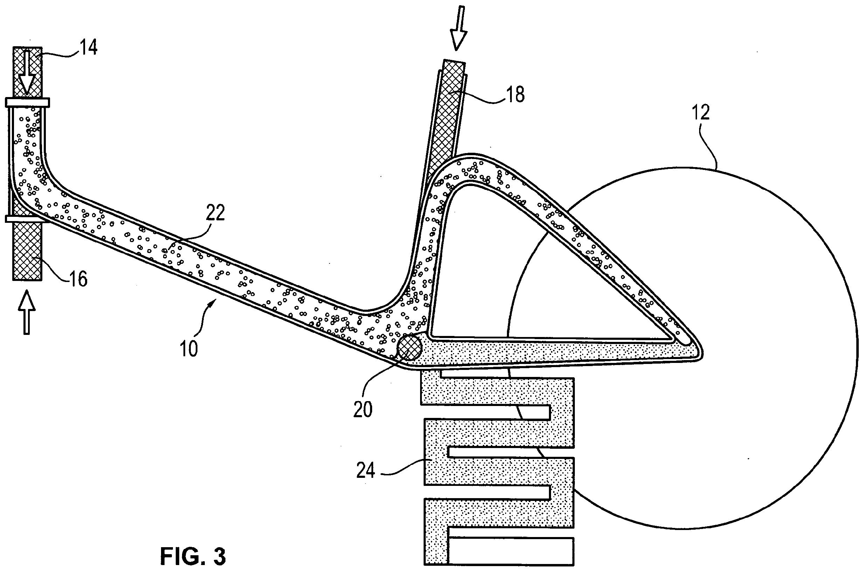

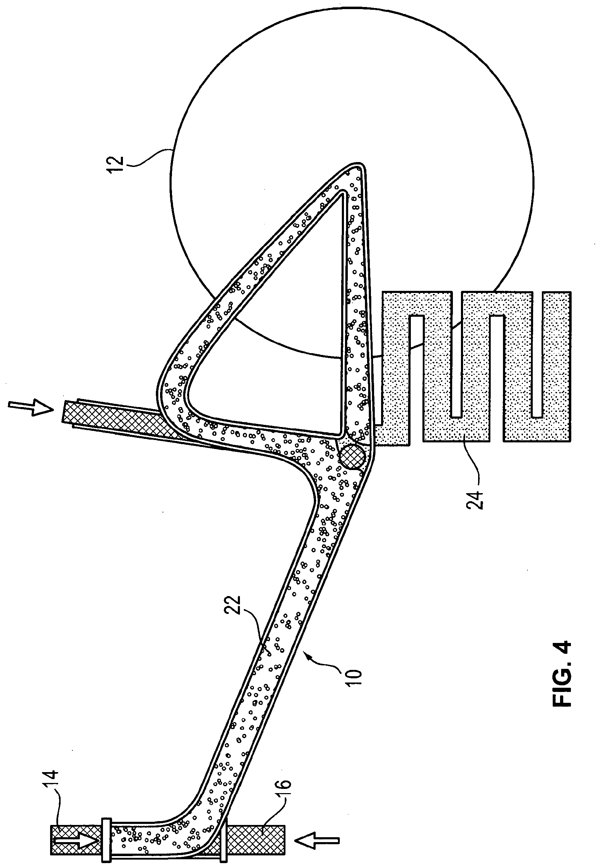

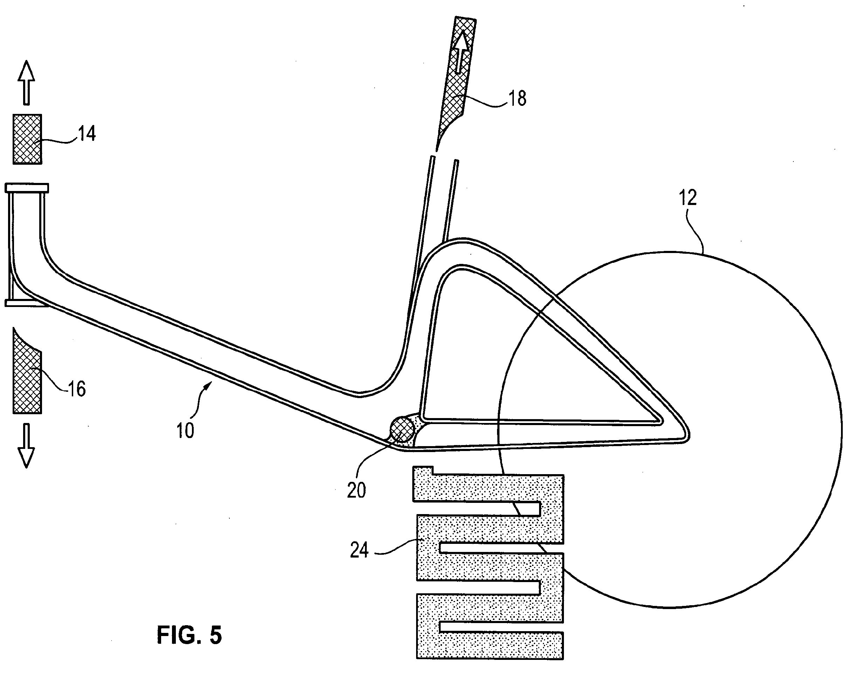

In Figur 3 ist bereits ein größerer Teil des Rahmens 10 entsprechend mit dem injizierten Fluid gefüllt. In Figur 4 sind die Fluidinjektion und die Verdrängung der plastischen Seele aus dem Rahmenbereich soweit abgeschlossen. Gemäß der Darstellung nach Figur 5 werden nun die Schieber 14, 16, 18 und 20 nach entsprechendem Abkühlen des Kunststoffmaterials in entsprechende Pfeilrichtung herausgezogen und die Nebenkavität 22 wird abgetrennt.

Bei dem vorgenannten Ausführungsbeispiel bildet in nicht näher dargestellter Weise die Kavität des geschlossenen Spritzgußwerkzeuges die Geometrie des Fahrradrahmens. Das hier nicht dargestellte Werkzeug wird mit mindestens einem Injektor für die Einbringung des Fluids 22, welches aus Gas, Wasser oder einem Gemisch von Gasen oder von Wasser mit Gas oder Gasen bestehen kann, ausgerüstet. Das Fluid zur Verdrängung der plastischen Seele kann volumenstromgeregelt oder aber auch Druck/Zeit-geregelt über ein voreingestelltes Profil injiziert werden. Durch den rohrförmigen Querschnitt bezieht sich die Abkühlphase der heißen Kunststoffschmelze lediglich auf die verbleibende Restwandstärke. Das bedeutet, dass gegenüber der Abkühlzeit eines vollen Rahmens eine enorme Kühlzeitreduktion erzielt wird. Die schnellere Kühlzeit verkürzt dementsprechend auch die gesamte Zykluszeit und die Bauteile lassen sich daher überaus kosteneffizient fertigen. Durch den bauteilinneren Hohlraum wird die Masse des gesamten Zweiradrahmens reduziert, was nicht nur einem Gewichts- sondern auch einen ökonomischen Vorteil mit sich bringt. Mit einem geschlossenen rohrförmigen Querschnitt wird grundsätzlich auch eine höhere Steifigkeit erzeugt, als bei einem Vollmaterialrahmen.

Im Folgenden wird der vollständige Verfahrensablauf zur Herstellung des Zweiradrahmens in Form der vorzunehmenden Verfahrensschritte wiedergegeben. Die Schrittfolge läuft vorteilhaft wie folgt ab:

| | |
|---|---|
| 1. | Schließen des Spritzgußwerkzeuges; |
| 2. | Schließkraftaufbau; |
| 3. | Einspritzen der thermoplastischen Kunststoffschmelze; |
| 4. | Wahlweise nur eine geringe Nachdruckzeit von ca. zwei Sekunden; |
| 5. | Öffnen von mindestens einem Injektor im Werkzeug und Beginn mit der Fluidinjektion; |
| 6. | Verdrängung der plastischen Seele mittels des Fluids aus der Bauteilkavität; |
| 7. | Aufrechterhaltung des Fluiddrucks für eine kurze Zeit im Bauteilinneren (Wirkung wie ein Nachdruck); |
| 8. | Wahlweise Spülvorgang im Bauteilinneren mittels des gleichen Fluids oder einem anderen Fluid, um eine bessere Kühlwirkung zu erzielen; |
| 9. | Ausblasen des Fluids (oder Absaugen mittels Vakuum); |
| 10. | Öffnen des Werkzeugs und |
| 11. | Auswerfen des Bauteils. |

Bei dieser Schrifftfolge ist zu beachten, dass der Schritt 9 nicht zwangsweise durchgeführt wird. Bei Verwendung von Gas als injiziertes Fluid kann dieses auch im Bauteil verbleibenDas verwendete Fluid kann aus Wasser oder Gas bestehen. Es kann aber auch aus beiden Medien bestehen, da beispielsweise häufig eine Luftblase vor dem Wasser vorangeschoben wird, oder wobei zunächst Stickstoff zur Hohlraumbildung und anschließend CO₂ zur Bauteilkühlung herangezogen wird.

Im dargestellten Ausführungsbeispiel wird bevorzugt als thermoplastisches Kunststoffmaterial Polyamid oder ein Polyolefin, welches über Glasfasern und/oder Kohlefasern und/oder Naturfasern verstärkt ist, verwendet.

Um den Rahmen 10 so steif wie möglich zu gestalten, können so genannte Tapes oder Organobleche, d.h. Glas-, Natur- oder Kohlefasergewebe in bestimmten Bereichen in das Werkzeug eingelegt werden. Diese werden kann mit der Kunststoffschmelze hinterspritzt. Die Tapes können von einer besonderen Vorrichtung im Werkzeug platziert und gehalten werden. Durch die zielorientierte Faserausrichtung der Tapes/ Organoblecheder Tapes bekommt der Rahmen in den kritischen Bereichen, wie beispielsweise im Bereich des Tret- oder Lenkkopflagers, mehr Steifigkeit. Um eine bestmögliche Verbindung zwischen den Tapes und der thermoplastischen Kunststoffschmelze zu erreichen, können die Tapes besonders vorteilhaft vor dem Einlegen in das Werkzeug auf eine bestimmte Temperatur vorgewärmt werden, wobei diese bestimmte Temperatur abhängig vom Matrixmaterial des Tapes zu wählen ist.

Um nach dem Spritzguß einen späteren zusätzlichen Aufwand für den Ein- und Anbau von zusätzlich benötigen Komponenten für den fertigen Fahrradrahmen zu vermeiden, können die benötigten Komponenten, wie beispielsweise Tret- und/oder Lenkkopflager, Gewindehülsen für Trinkflaschenhalterungen, die Haltung für Akkus bei Ausgestaltung als Elektrofahrrad oder beispielsweise die Halterung für einen konventionellen Motor im Falle der Verwendung der Erfindung im Rahmen von motorbetriebenen Zweirädern, wie Motorrädern, gleich in das Spritzgußwerkzeug eingelegt und umspritzt werden. So kann sich im Produktionsprozess der Verfahrensablauf wesentlich vereinfachen, da mit diesem Verfahrensschritt der Fahrradrahmen gleich mit den benötigten Komponenten aus dem Spritzgußwerkzeug entnommen werden kann.

Zur Erzeugung eines schönen und individuellen Designs kann der Rahmen über Folien mit einem bedruckten Design versehen werden. Diese werden in das Werkzeug eingelegt und hinterspritzt. Dies wird auch als "Inmold Labelling" oder "Inmold Decoration" bezeichnet. Anstelle der reinen Designfolien können auch Funktionalitäten über funktionalisierte Folien erreicht werden. Diese mit der Funktionalität versehenen Folien werden ebenfalls in das Werkzeug eingelegt und mit dem Kunststoffmaterial hinterspritzt. Die funktionalisierten Folien können beispielsweise bedruckte Leiterbahnen bzw. eine kapazitive Sensorik mit ggf. einem aufgebrachten Microcontroller sein. Sie können aber auch Transpondereigenschaften beinhalten. Des Weiteren könnte man Folie mit einem GPS-Signal funktionalisieren, wobei dieses dann zur Diebstahlsicherung herangezogen werden könnte.

Durch die positive Eigenschaft, dass der Rahmen aus Kunststoff besteht und daher nicht leitend ist, kann man über die ein- und/oder aufgebrachte Funktionalität störungsfrei Signale, Daten und/oder Energie übermitteln bzw. übertragen. Eine zusätzliche Verkabelung um die hergestellte Energie von einer energieerzeugenden Einheit, wie beispielsweise einem Dynamo zum Verbraucher, beispielsweise der Fahrradleuchte zu leiten, könnte auch mittels einer entsprechend funktionalisierten Folie substituiert werden.

Ein Fahrradrahmen 10, wie er beispielsweise in dem ersten Ausführungsbeispiel unter Hinzuziehung der Figuren 1 bis 5 erläutert wurde, kann aus einem einzigen, aber auch aus einer Mischung mehrerer Polymere hergestellt werden. Für den Rahmen sind grundsätzlich Polyamide oder Polyolifine besonders empfehlenswert. Als weitere Komponenten können aber auch TPE oder TPU in das Werkzeug eingespritzt werden. Diese sind nicht zwangsläufig mit einem Hohlraum zu versehen, sondern dienen oftmals zur Überspritzung bzw. als Ummantelung der ersten Komponente.

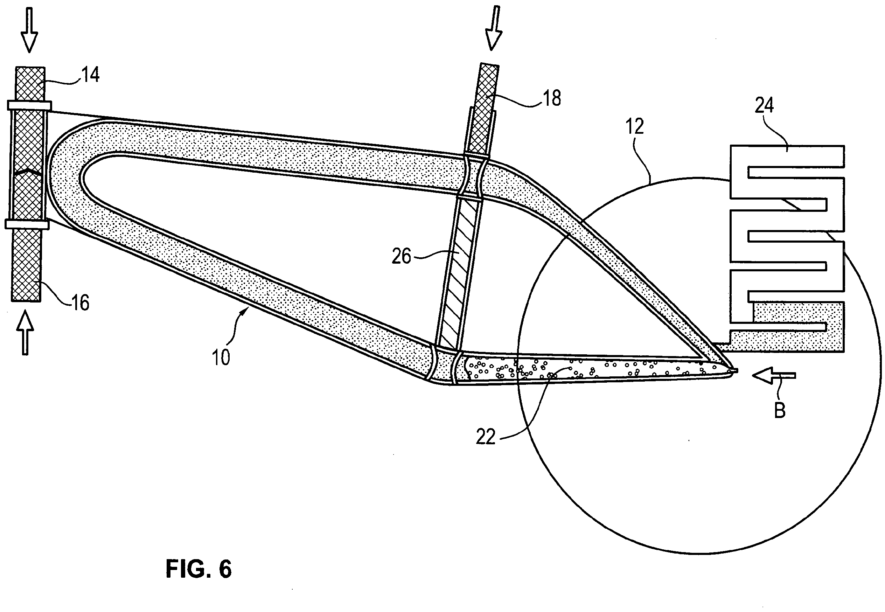

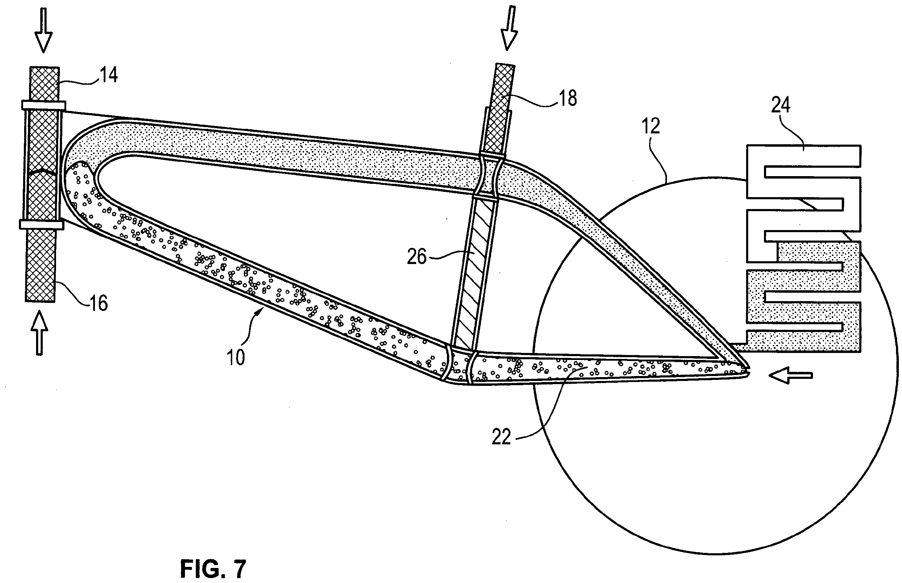

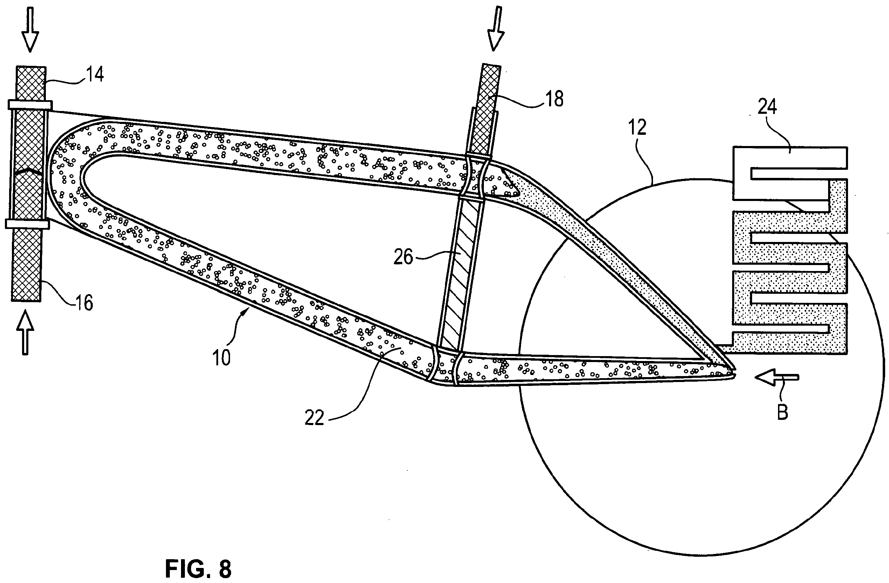

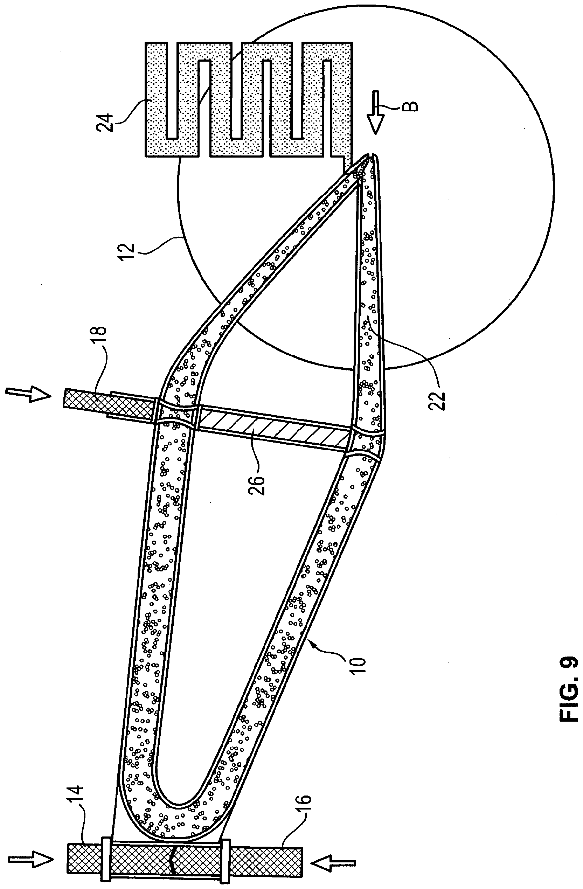

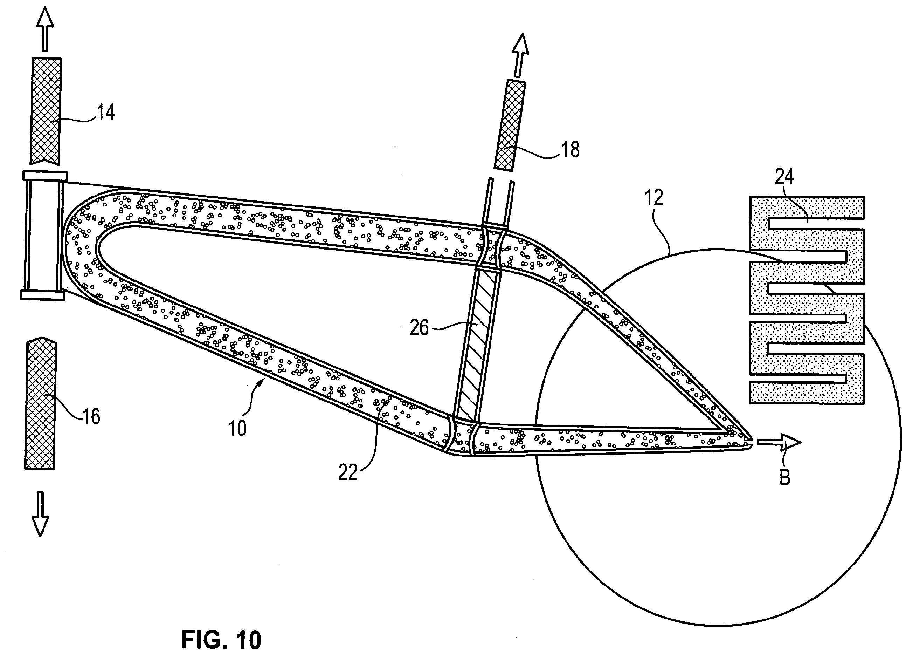

Anhand der Figuren 6 bis 10 ist eine weitere Ausführungsform der Erfindung schematisch dargestellt. Hier ist das Verfahren zur Herstellung eines Herrenfahrrades gezeigt. Der Fahrradrahmen 10 hat also eine gegenüber dem Fahrradrahmen gemäß dem ersten Ausführungsbeispiel nach den Figuren 1 bis 5 unterschiedliche Formgebung, wie sie für ein Herrenfahrrad charakteristisch ist. Im Wesentlichen sind hier die gleichen Bauteile ebenfalls mit gleichem Bezugszeichen bezeichnet. Die Schrittabfolge des Herstellungsverfahrens, wie sie in den Figuren 6 bis 10 dargestellt ist, entspricht im Wesentlichen auch derjenigen gemäß der Figuren 1 bis 5 der ersten Ausführungsbeispiels. Allerdings ist in diesem Beispiel eine Mittelstrebe 26 aus Aluminium oder aus einem anderen Material in das Spritzgußwerkzeug eingelegt, sodass es sich während des Spritzgußvorganges mit dem thermoplastischen Kunststoff verbindet. Diese Mittelstrebe 26 weist auch die Aufnahmeöffnung für die später einzusetzende Sattelstütze auf und kann auch aus prozesstechnischen oder anderen Gründen mit einem anderen Material, vorzugsweise Polyurethan, gefüllt sein.

Das Fluid 22 wird im hier dargestellten Ausführungsbeispiel in Pfeilrichtung des Pfeils B zum Verdrängen der plastischen Seele injiziert. In den Figuren 6 bis 10 ist der jeweilige Fortschritt der Verdrängung der Seele dargestellt, wobei auch hier die plastische Seele in eine Nebenkavität 24 verdrängt wird.

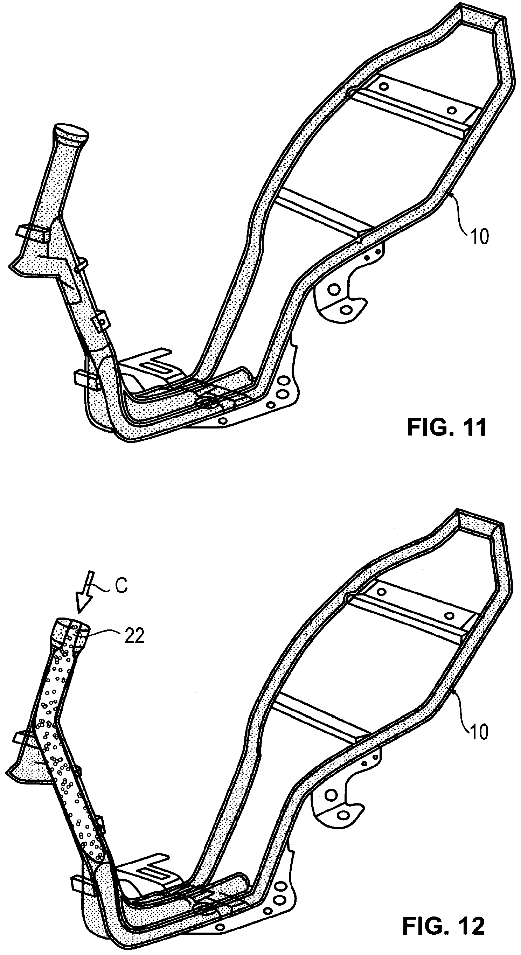

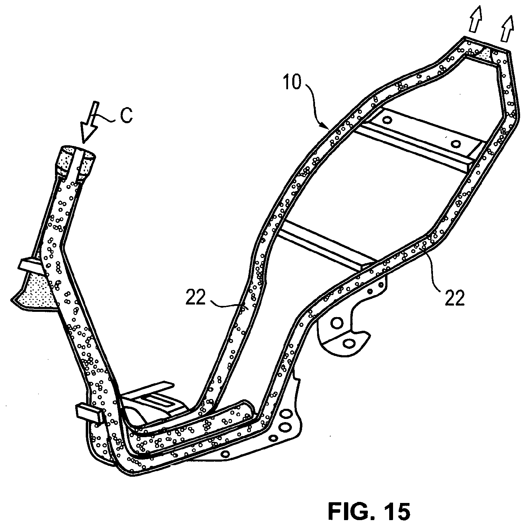

Zum Vergleich ist in Figuren 11 bis 15 noch schematisch die nicht von der Erfindung umfasste Herstellung eines Rahmens für einen Scooter (Motorroller) dargestellt. Hierbei handelt es sich um ein motorbetriebenes Zweirad. Der etwas stabilere und komplexere Rahmen des Scooters 10 ergibt sich aus der Darstellung gemäß der Figur 11. Wie auch zuvor bei dem Fahrradrahmen ist hier lediglich das Kunststoffmaterial und nicht das geschlossene Spritzgußwerkzeug gezeigt.

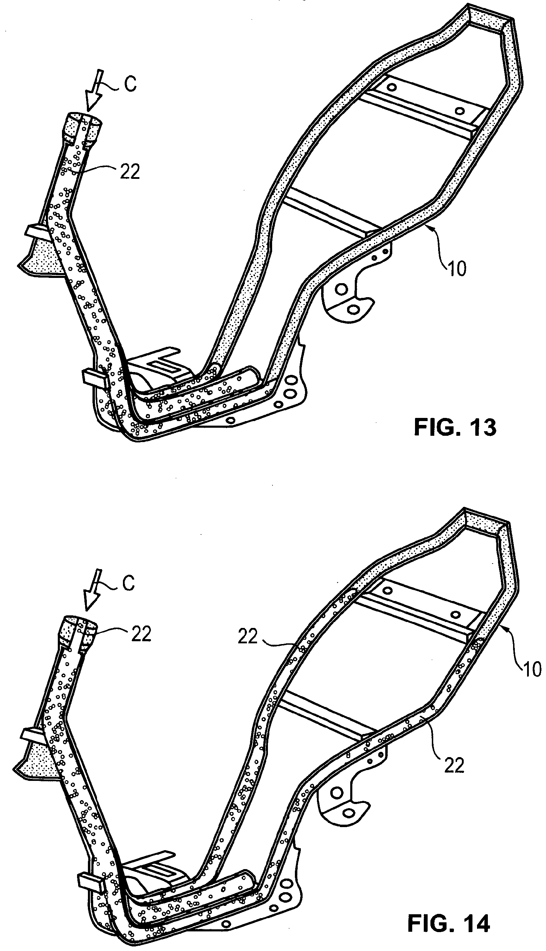

Entsprechend der Figur 12 wird in Pfeilrichtung C das Fluid injiziert. Dieses verdrängt die plastische Seele zunehmend, wobei die jeweiligen Fortschritte der Verdrängung der Seele in den Figuren 13 bis 15 gezeigt sind. Nicht näher dargestellt ist in diesem Ausführungsbeispiel die Nebenkavität, die hinter dem Rahmen anschließt oder auch das Spritzgusswerkzeug mit einem Heiß-, Teiheiß- oder Kaltkanal (dür das Masserpckdrückverfahren) und das verdrängte Kunststoffmaterial aufnimmt. Anhand dieses komplexeren Beispiels kann gezeigt werden, dass das einfache und schnelle Herstellverfahren für den Zweiradrahmen auch bei Motor betriebenen Zweirädern mit komplexerem Rahmenaufbau verwendet werden kann.
Werkzeug derart eingebracht wird, dass das im Werkzeug eingelegte Gewebe durchflutet wird.
- Erhöhung von Temperatur und Druck im Werkzeuginneren und dadurch Polymerisierung der eingebrachten Kunststoffmasse.
- Entnahme des Zweiradrahmens nach abgeschlossener Polymerisation aus dem Werkzeug.

Der aus dem thermoplastischen Matrixmaterial bestehende Rahmen ist jederzeit wieder recyclebar und dadurch wiederverwertbar.

Bei dieser Verfahrensführung sollte im Rahmeninneren das injizierte Fluid nicht mit der Kunststoffschmelze in Berührung kommen. Daher wird bei der Insitu-Polymerisation ein Schlauch in das Werkzeug eingelegt. Der Schlauch dient hierbei als Seele und kann mittels des Fluiddrucks in der Kavität aufgeblasen werden. Während der Polymerisation wird das Fluid im Schlauch mit Druck beaufschlagt. Dieser Druck führt im Verfahren zu einer besseren Bauteilequalität, wobei der Druck über die Zeit variieren kann (Druck/Zeit-Profil). Der aufgeblasene Schlauch bildet den Hohlraum.

Ein Fahrradrahmen 10, wie er beispielsweise in dem ersten Ausführungsbeispiel unter Hinzuziehung der Figuren 1 bis 5 erläutert wurde, kann aus einem einzigen, aber auch aus einer Mischung mehrerer Polymere hergestellt werden. Für den Rahmen sind grundsätzlich Polyamide oder Polyolifine besonders empfehlenswert. Als weitere Komponenten können aber auch TPE oder TPU in das Werkzeug eingespritzt werden. Diese sind nicht zwangsläufig mit einem Hohlraum zu versehen, sondern dienen oftmals zur Überspritzung bzw. als Ummantelung der ersten Komponente.

Anhand der Figuren 6 bis 10 ist eine weitere Ausführungsform der Erfindung schematisch dargestellt. Hier ist das Verfahren zur Herstellung eines Herrenfahrrades gezeigt. Der Fahrradrahmen 10 hat also eine gegenüber dem Fahrradrahmen gemäß dem ersten Ausführungsbeispiel nach den Figuren 1 bis 5 unterschiedliche Formgebung, wie sie für ein Herrenfahrrad charakteristisch ist. Im Wesentlichen sind hier die gleichen Bauteile ebenfalls mit gleichem Bezugszeichen bezeichnet. Die Schrittabfolge des Herstellungsverfahrens, wie sie in den Figuren 6 bis 10 dargestellt ist, entspricht im Wesentlichen auch derjenigen gemäß der Figuren 1 bis 5 der ersten Ausführungsbeispiels. Allerdings ist in diesem Beispiel eine Mittelstrebe 26 aus Aluminium oder aus einem anderen Material in das Spritzgußwerkzeug eingelegt, sodass es sich während des Spritzgußvorganges mit dem thermoplastischen Kunststoff verbindet. Diese Mittelstrebe 26 weist auch die Aufnahmeöffnung für die später einzusetzende Sattelstütze auf und kann auch aus prozesstechnischen oder anderen Gründen mit einem anderen Material, vorzugsweise Polyurethan, gefüllt sein.

Das Fluid 22 wird im hier dargestellten Ausführungsbeispiel in Pfeilrichtung des Pfeils B zum Verdrängen der plastischen Seele injiziert. In den Figuren 6 bis 10 ist der jeweilige Fortschritt der Verdrängung der Seele dargestellt, wobei auch hier die plastische Seele in eine Nebenkavität 24 verdrängt wird.

Mit dem erfindungsgemäßen Verfahren lassen sich aber nicht nur Fahrradrahmen herstellen. Anhand des dritten Ausführungsbeispiels gemäß den Figuren 11 bis 15 ist schematisch die Herstellung eines Rahmens für einen Scooter (Motorroller) dargestellt. Hierbei handelt es sich um ein motorbetriebenes Zweirad. Der etwas stabilere und komplexere Rahmen des Scooters 10 ergibt sich aus der Darstellung gemäß der Figur 11. Wie auch zuvor bei dem Fahrradrahmen ist hier lediglich das Kunststoffmaterial und nicht das geschlossene Spritzgußwerkzeug gezeigt.

Entsprechend der Figur 12 wird in Pfeilrichtung C das Fluid injiziert. Dieses verdrängt die plastische Seele zunehmend, wobei die jeweiligen Fortschritte der Verdrängung der Seele in den Figuren 13 bis 15 gezeigt sind. Nicht näher dargestellt ist in diesem Ausführungsbeispiel die Nebenkavität, die hinter dem Rahmen anschließt oder auch das Spritzgusswerkzeug mit einem Heiß-, Teiheiß- oder Kaltkanal (dür das Masserpckdrückverfahren) und das verdrängte Kunststoffmaterial aufnimmt. Anhand dieses komplexeren Beispiels kann gezeigt werden, dass das einfache und schnelle Herstellverfahren für den Zweiradrahmen auch bei Motor betriebenen Zweirädern mit komplexerem Rahmenaufbau verwendet werden kann.

## Patentansprüche

1. Verfahren zur Herstellung eines im Inneren mindestens einen Hohlraum aufweisenden Kunststoffrahmens für ein Fahrrad mittels Kunststoffspritzguss, wobei der Rahmen wenigstens ein Steuerrohr, ein Unterrohr, ein Sitzrohr, Kettenstreben und Sitzstreben aufweist, und wobei das Verfahren die folgenden Schritte umfasst:
- Einspritzen einer thermoplastischen Kunststoffschmelze in ein geschlossenes Spritzgusswerkzeug;
- Injizieren mindestens eines Fluids zur Verdrängung der plastischen Seele aus der Bauteilkavität und
- zumindest kurzes Aufrechterhalten des Fluiddruckes im Bauteilinneren,
**dadurch gekennzeichnet,**
**dass** mehrere Fluide in das Spritzgusswerkzeug injiziert und deren einzelnen Fluidvolumenströme oder Druck/Zeit - Profile separat voneinander geregelt werden;
**dass** im Bereich wenigstens eines in den Kunststoffrahmen zu integrierenden Teils, beispielsweise eines Motors oder eines Akkumulators, ein entsprechend geformter Kern während des Spritzgussvorganges eingesetzt wird, so dass dieser Bereich nach der Bauteilentformung hohl ist; und
**dass** wenigstens ein anderes in den Kunststoffrahmen zu integrierendes Teil, beispielsweise ein Lenkkopflager oder ein Tretlager, in das Spritzgusswerkzeug eingelegt, mittels einer Vorrichtung im Spritzgusswerkzeug gehalten und mit Kunststoff umspritzt wird.

2. Verfahren nach Anspruch 1, **dadurch gekennzeichnet, dass** das Fluid nach dem kurzen Aufrechterhalten des Fluiddruckes im Bauteilinneren ausgeblasen und/oder abgesaugt wird.

3. Verfahren nach Anspruch 1 oder 2, **dadurch gekennzeichnet, dass** das Fluid die plastische Seele in eine im Spritzgusswerkzeug vorgesehene Nebenkavität drückt.

4. Verfahren nach Anspruch 1 oder 2, **dadurch gekennzeichnet, dass** das Fluid die plastische Seele über ein Masserückdrückverfahren durch einen Kanal, beispielsweise einen Heißkanal, einen Teilheißkanal oder einen Kaltkanal, in den Schneckenvorraum der Spritzgußmaschine drückt.

5. Verfahren nach Anspruch 1 oder 2, **dadurch gekennzeichnet, dass** mindestens eine formgebende Kavität des Spritzgusswerkzeugs mit der thermoplastischen Kunststoffschmelze nur teilgefüllt wird und dass die plastische Seele durch das Injizieren des Fluids verdrängt wird, so dass die thermoplastische Kunststoffschmelze derart aufgeblasen wird, dass sie sich unter Bildung eines Hohlraums an die Wandung des Spritzgusswerkzeugs anlegt und die formgebende Kavität danach vollständig gefüllt ist.

6. Verfahren nach einem der vorhergehenden Ansprüche, **dadurch gekennzeichnet, dass** vor dem Einspritzen der Kunststoffschmelze ein oder mehrere Elemente aus der Gruppe einer Design- und/oder Funktionsfolie, eines Tapes bzw. Organoblechs aus Kohle-, Glas- oder Naturfasergewebe in das Werkzeug eingelegt und mit der Kunststoffschmelze hinterspritzt oder umspritzt werden.

7. Verfahren nach einem der vorhergehenden Ansprüche, **dadurch gekennzeichnet, dass** wenigstens ein Teil des Fahrradrahmens, beispielsweise das Sitzrohr, als fertiges Teil aus Kunststoff, Aluminium oder einem anderen Material in das Spritzgusswerkzeug eingelegt und mit dem thermoplastischen Kunststoff während des Spritzgussvorganges verbunden wird.

8. Verfahren nach einem der vorhergehenden Ansprüche, **dadurch gekennzeichnet, dass** das Fluid nach der Hohlraumbildung zirkuliert wird, um die Kühlung des Kunststoffes zu unterstützen.

9. Verfahren nach einem der vorhergehenden Ansprüche, **dadurch gekennzeichnet, dass** es sich bei dem Kunststoff um ein Polyamid, vorzugsweise Polyamid 12, Polyamid 6 oder Polyamid 6.6, Polypropylen oder Polyethylen, Polyethersulfon, Polyetherimid, Polyetherketon, Polyphenylensulfid, Polyvinylchlorid, einen Polyester, Acrylnitril-Butadien-Styrol (ABS), Polycarbonat/Acrylnitril-Butadien-Styrol (ABC/PC), Polycarbonat (PC), Polybutylenterephtalat oder Polyterephtalatethylen, vorzugsweise um ein Polybutylenterephtalat oder Polyterephtalatethylen handelt.

10. Verfahren nach einem der vorhergehenden Ansprüche, **dadurch gekennzeichnet, dass** die injizierten Fluide Wasser und/oder ein oder mehrere Gase umfassen.

## Claims

1. Method of manufacturing a plastic frame for a two-wheeler having at least one hollow space in the interior by means of plastic injection molding, said method comprising the following steps:
- injecting a thermoplastic plastic melt into a closed injection molding tool;
- injecting at least one fluid to displace the plastic core from the component cavity; and
- at least briefly maintaining the fluid pressure in the component interior,
**characterized in that**
a plurality of fluids are injected into the injection molding tool and their individual fluid volume flows or pressure/time profiles are regulated separately from one another;
a correspondingly shaped core is inserted during the injection molding process in the region of at least one part to be integrated into the plastic frame such as a motor and/or a storage battery such that this region is hollow after the component demolding; and
at least one part to be integrated into the plastic frame, such as a steering head bearing and/or a bottom bracket bearing, are inserted into the injection molding tool, are held in the injection molding tool by means of an apparatus and are overmolded with plastic.

2. Method in accordance with claim 1, **characterized in that** the fluid is blown out and/or sucked out after a brief maintenance of the fluid pressure in the component interior.

3. Method in accordance with claim 1 or claim 2, **characterized in that** the fluid presses the plastic core into a secondary cavity provided in the injection molding tool.

4. Method in accordance with claim 1 or claim 2, **characterized in that** the fluid presses the plastic core via a mass back pressure process through a passage, for example a hot passage, a partly hot passage, or a cold passage, into the screw antechamber of the injection molding machine.

5. Method in accordance with claim 1 or claim 2, **characterized in that** at least one shaping cavity of the injection molding tool is only partially filled with the thermoplastic plastic melt; and **in that** the plastic core is displaced by the injection of the fluid so that the thermoplastic plastic melt is inflated such that it contacts the wall of the injection molding tool while forming a hollow space and the shaping cavity is then completely filled.

6. Method in accordance with one of the preceding claims, **characterized in that** a design and/or functional film and/or a tape or an organic sheet of fabric of carbon fibers, glass fibers and/or natural fibers is placed into the tool before the injection of the plastic melt and is back-injection molded or overmolded with the plastic melt.

7. Method in accordance with one of the preceding claims, **characterized in that** at least one part of the bicycle frame such as the middle strut are placed in as a finished part composed of plastic, aluminum, or of another material and are bonded to the thermoplastic during the injection molding process.

8. Method in accordance with one of the preceding claims, **characterized in that** the fluid is circulated after the hollow space formation to promote the cooling of the plastic.

9. Method in accordance with one of the preceding claims, **characterized in that** the plastic is a polyamide, preferably polyamide 12, polyamide 6 or polyamide 6.6, polypropylene or polyethylene, polyether sulfone, polyetherimide, polyetherketone, polyphenylene sulfide, polyvinyl chloride, a polyester, acrylonitrile butadiene styrene (ABS), polycarbonate/acrylonitrile butadiene styrene (ABC/PC), polycarbonate (PC), polybutylene terephthalate or polyterephthalate ethylene, preferably a polybutylene terephthalate or polyterephthalate ethylene.

10. Method in accordance with one of the preceding claims, **characterized in that** the injected fluids comprise water and/or one or multiple gases.

## Revendications

1. Procédé de fabrication d'un cadre en matière plastique pour une bicyclette, présentant au moins un espace creux à l'intérieur, par moulage par injection de matière plastique, le cadre présentant au moins un tube de direction, un tube diagonal, un tube de selle, des bases et des haubans, et le procédé comprenant les étapes suivantes :
- l'injection d'une masse fondue de matière thermoplastique dans un outil de moulage par injection fermé ;
- l'injection d'au moins un fluide pour déplacer l'âme plastique hors de la cavité du composant et
- le maintien au moins bref de la pression du fluide à l'intérieur du composant,
**caractérisé en ce que**
plusieurs fluides sont injectés dans l'outil de moulage par injection et leurs débits volumiques de fluide individuels ou leurs profils pression/temps sont réglés séparément les uns des autres ;
**en ce que**, dans la zone d'au moins une pièce à intégrer dans le cadre en matière plastique, par exemple d'un moteur ou d'un accumulateur, un noyau formé de manière correspondante est inséré pendant le processus de moulage par injection, de telle sorte que cette zone est creuse après le démoulage du composant ; et
**en ce qu'**au moins une autre pièce à intégrer dans le cadre en matière plastique, par exemple un palier de tête de direction ou un pédalier, est introduite dans l'outil de moulage par injection, maintenue dans l'outil de moulage par injection au moyen d'un dispositif et surmoulée avec de la matière plastique.

2. Procédé selon la revendication 1, **caractérisé en ce que** le fluide est soufflé et/ou aspiré après le maintien bref de la pression du fluide à l'intérieur du composant.

3. Procédé selon la revendication 1 ou 2, **caractérisé en ce que** le fluide pousse l'âme plastique dans une cavité secondaire prévue dans l'outil de moulage par injection.

4. Procédé selon la revendication 1 ou 2, **caractérisé en ce que** le fluide pousse l'âme plastique au moyen d'un procédé de refoulement de masse à travers un canal, par exemple un canal chaud, un canal partiellement chaud ou un canal froid, dans l'antichambre de la vis de la machine de moulage par injection.

5. Procédé selon la revendication 1 ou 2, **caractérisé en ce qu'**au moins une cavité de mise en forme de l'outil de moulage par injection n'est que partiellement remplie de la masse fondue de matière thermoplastique et **en ce que** l'âme plastique est déplacée par l'injection du fluide, de telle sorte que la masse fondue de matière thermoplastique fondue est gonflée de telle sorte qu'elle s'applique contre la paroi de l'outil de moulage par injection en formant un espace creux et la cavité de mise en forme est ensuite entièrement remplie.

6. Procédé selon l'une quelconque des revendications précédentes, **caractérisé en ce qu'**avant l'injection de la masse fondue de matière plastique, un ou plusieurs éléments du groupe d'un film de conception et/ou de fonction, d'un ruban ou d'une tôle organique en tissu de carbone, de verre ou de fibres naturelles sont introduites dans l'outil et enrobées ou surmoulées par injection avec la masse fondue de matière plastique.

7. Procédé selon l'une quelconque des revendications précédentes, **caractérisé en ce qu'**au moins une pièce du cadre de bicyclette, par exemple le tube de selle, est introduite dans l'outil de moulage par injection en tant que pièce finie en matière plastique, en aluminium ou en un autre matériau et est liée à la matière thermoplastique pendant l'opération de moulage par injection.

8. Procédé selon l'une quelconque des revendications précédentes, **caractérisé en ce que** le fluide est mis en circulation après la formation de l'espace creux pour aider à refroidir la matière plastique.

9. Procédé selon l'une quelconque des revendications précédentes, **caractérisé en ce que** la matière plastique consiste en un polyamide, de préférence le polyamide 12, le polyamide 6 ou le polyamide 6.6, du polypropylène ou du polyéthylène, du polyéthersulfone, du polyétherimide, du polyéthercétone, du sulfure de polyphénylène, du chlorure de polyvinyle, un polyester, de l'acrylonitrile-butadiène-styrène (ABS), du polycarbonate/acrylonitrile-butadiène-styrène (ABC/PC), du polycarbonate (PC), du polybutylène téréphtalate ou du polytéréphtalate-éthylène, de préférence du polybutylène téréphtalate ou du polytéréphtalate-éthylène.

10. Procédé selon l'une quelconque des revendications précédentes, **caractérisé en ce que** les fluides injectés comprennent de l'eau et/ou un ou plusieurs gaz.
